# EUROPÄISCHE PATENTSCHRIFT

(11) **EP 0 529 605 B1**
(45) Veröffentlichungstag und Bekanntmachung des Hinweises auf die Patenterteilung: **06.11.1996**
(21) Anmeldenummer: 92114532.2
(22) Anmeldetag: 26.08.1992
(51) Int. Cl.: H02H 9/02, G05F 1/573

(54) **Verfahren zur Strombegrenzung eines Längsreglers sowie deren Verwendung**
Method for current limitation of a series regulator and its application
Méthode pour la limitation de courant d'un régulateur serie et son application

(30) Priorität: 29.08.1991 DE 4128679
(43) Veröffentlichungstag der Anmeldung: 03.03.1993
(73) Patentinhaber: ROBERT BOSCH GMBH, 70442 Stuttgart (DE)
(72) Erfinder: Katz, Hanspeter, Dipl.-Ing., W-7000 Stuttgart (DE); Hüther, Gerhard, Dipl.-Ing., W-7150 Backnang (DE)

(56) Entgegenhaltungen:
- FR-A- 2 618 276

## Beschreibung

Die Erfindung betrifft ein Verfahren zur Strombegrenzung eines Längsreglers sowie dessen Verwendung.

Längsregler können zur Strombegrenzung beispielsweise in Netzgeräten verwendet werden (Tietze/Schenk, Halbleiterschaltungstechnik, 2. Auflage, 1971, Seiten 338 bis 339). Einer Stromzunahme wird entgegengewirkt, indem der Stelltransistor weniger leitend gesteuert wird.

Andere Methoden zur Strombegrenzung verwenden Strombegrenzungwiderstände, die überbrückt werden (DE 38 28 809 A1, DE 39 03 789 A1, DE 35 35 864 C2), wenn ihre Strombegrenzungsfunktion nicht mehr benötigt wird. Diese Methoden sind oft dynamisch zu träge.

Aus der FR-2 618 276 A1 ist ein Längsregler bekannt, dem im Begrenzungsbetrieb in Abhängigkeit des gemessenen Stromes Widerstände über Schalter zwischen Quelle und Verbraucher zugeschaltet werden. Diese Widerstände können über weitere Schalter durch Parallelwiderstände überbrückt werden, bzw. ganz kurzgeschlossen werden.

Aufgabe der Erfindung ist es, eine Strombegrenzungsmöglichheit anzugeben, die auf Belastungssprünge schnell reagiert und wenig Verlustleistung verursacht. Außerdem soll eine Verwendung aufgezeigt werden. Diese Aufgabe wird durch die Merkmale des Anspruchs 1 und bezüglich der Verwendung durch Merkmale des Anspruchs 7 gelöst. Die übrigen Ansprüchen betreffen vorteilhafte Ausgestaltungen des Verfahrens.

Die Erfindung beruht auf folgenden Erkenntnissen:

Längsregler erstellen, wenn sie nicht im begrenzenden Betrieb arbeiten, unnötige Verlustquellen dar. Durch die Maßnahmen der Erfindung werden diese Verluste im nicht begrenzenden Betrieb, d.h. in einem Betrieb, der unterhalb des Regelbetriebs liegt und bei dem das Stellglied voll leitend gesteuert wird, wirksam reduziert, ohne die Wiederbereitschaft der Strombegrenzung, z.B. beim Auftreten verbraucherseitiger Kurzschlüsse, zu verzögern. Der Längsregler nach der Erfindung wird durch die niederohmige Überbrückung nicht vollständig außer Funktion gesetzt und kann so auf plötzliche auftretende Belastungssprünge schnell reagieren. Im Gegensatz zur Strombegrenzung gemäß der nicht vorveröffentlichten DE 40 40 289.4 wird nicht der gesamte Längsregeler überbrückt, sondern nur das Stellglied. Somit ist die Stromerfassung des Längsreglers weiterhin aktiv und kann den Längs regler bei Belastungsänderungen schnell in die Srombegrenzungsfunktion überführen. Wegen der reduzierten Verluste im nicht begrenzenden Betrieb eignet sich die Erfindung für Stromversorgungssysteme, deren Kapazität begrenzt ist; z.B. solarzellengespeiste Systeme. Die Erfindung ermöglicht, daß ein Stromversorgungssystem, wie z.B. ein Satellitenstromversorgungssystem, nach Ausfall eines Einzelgerätes weiter in Betrieb bleibt.

Nach der Ausgestaltung nach Anspruch 2 ist gewährleistet, daß der Längsregler durch thermische Überlastung, z.B. bei einem länger andauernden Kurzschluß, nicht zerstört wird. Nach Aufheben eines solchen Kurzschlusses kann er mit den Maßnahmen gemäß Anspruch 5 wieder aktiviert werden. Bei der Ausgestaltung nach Anspruch 3 wird der Längs regler im Überlastungsfall so gesteuert werden, daß nur noch ein Minimalstrom fließt und so eine Zerstörung verhindert wird. Anspruch 6 zeigt eine Ausgestaltung auf, die eine beliebige Reduzierung der Durchlaßverluste zuläßt. Gleichzeitig steigt auch die Sicherheit im System; denn bei einem Ausfall eines Überbrückungsgliedes ist mindestens immer noch ein weiteres vorgesehen, das zur Reduzierung der Verlustleistung beiträgt.

Durch die Verwendung eines Regelverstärkers mit PID-Verhalten kann die Strombegrenzung optimal auf die Lastkennlinie abgestimmt werden.

Anhand der Zeichnungen werden nun Ausführungsbeispiele der Erfindung erläutert. Es zeigen:

Figur 1 ein Prinzipschaltbild einer Strombegrenzungseinrichtung, zum Durchführen des Verfahrens nach der Erfindung,

Figur 2 einen Stromlaufplan einer Strombegrenzung mit Schutzschaltung, Auswerteeinrichtung und Rücksetzeinrichtung.

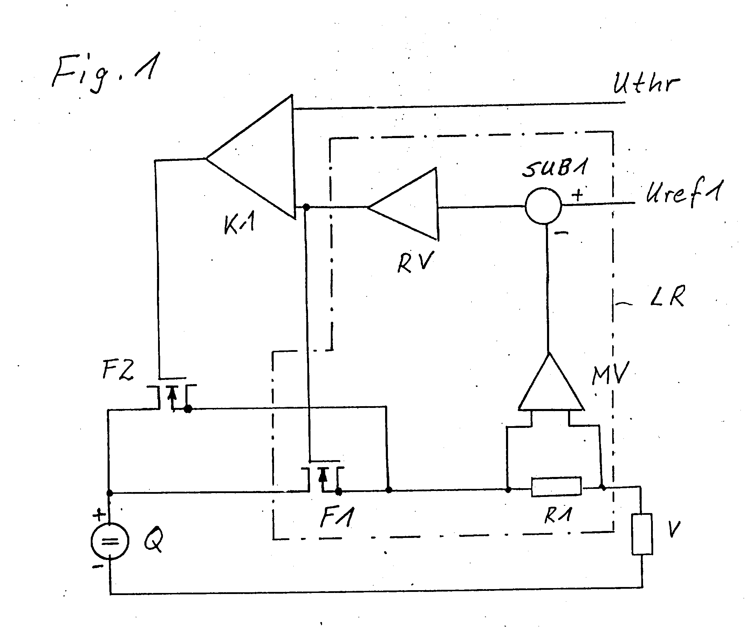

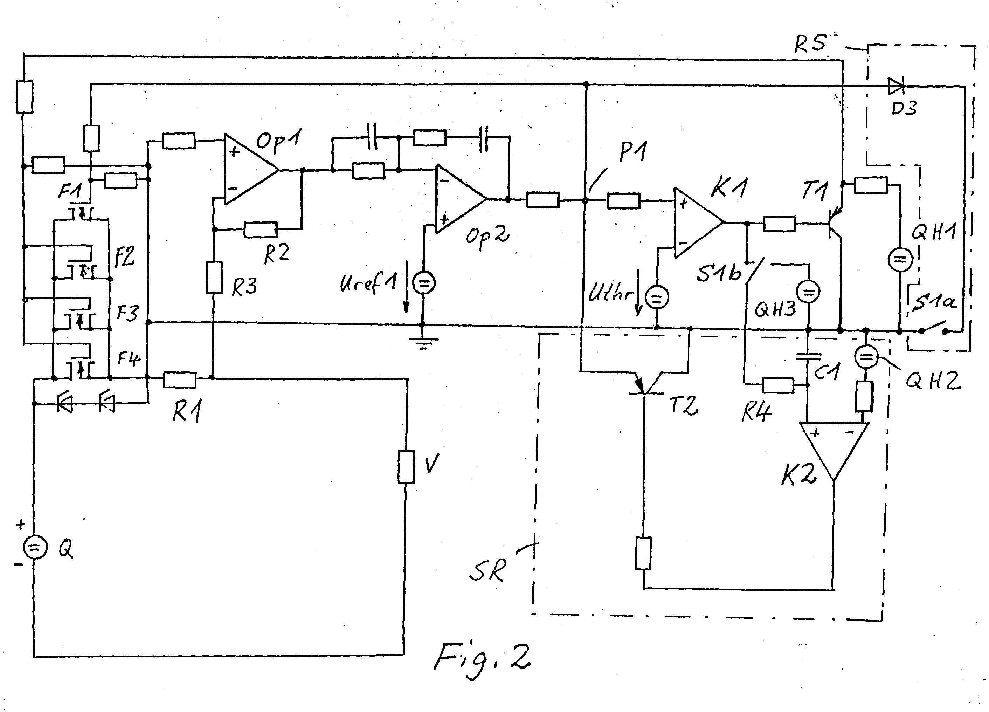

In Figur 1 wird ein Verbraucher V über einen zur Strombegrenzung bestimmten Längsregler LR von einer Versorgungsspannungsquelle Q gespeist. Das Stellglied F1 des Längsreglers ist in diesem Ausführungsbeispiel als Leistungs-MOSFET ausgebildet. Zur Steuerung des MOSFET F1 ist eine Regelschleife vorgesehen bestehend aus einem Stromsensor in Form des Srommeßwiderstandes R1, einem Meßverstärker MV zur Verstärkung des am Strommeßwiderstandes R1 erfaßten stromproportionalen Spannungsabfalls, einer Substrahierstufe SUB1 zur Bildung eines Differenzsignals zwischen der Ausgangsspannung des Meßverstärkers MV und einer Referenzspannung Urefl und einem mit PID-Verhalten ausgebildeten Regelverstärer RV, dessen Ausgang zum Gate des MOSFET F1 führt. Der Längsregler LR führt so einen Soll-/Istwertvergleich durch und regelt über sein Stellglied F1 den Maximalstrom. Die Gatespannung des MOSFET F1, bzw. die Ausgangsspannung des Regelverstärkers RV wird einer Auswerteeinrichtung in Form des Schwellwertkomparators K1 zugeführt. Ist die Gatespannung klein, z.B. zwischen 2 und 4 V arbeitet der MOSFET F1 im linearen Regelbetrieb zur Strombegrenzung.Die Gatespannung ist dann kleiner als die Schwellenspannung Uthr von z.B. 8 V und der Schwellwertkomparator K1 liefert an seinem Ausgang ein Sperrsignal für einen Halbleiterschalter F2, der parallel zum Stellglied F1 angeordnet ist. Steigt die Gatespannung des MOSFET F1 über die Schwellenspannung Uthr an, weil der Laststrom unter den Maximalwert gesunken ist, liefert der Schwellwertkomparator K1 ein Einschaltsignal für den Halbleiterschalter F2. In diesem Falle übt der Längsregler LR keine Strombegrenzungsregelfunktion mehr aus, sondern agiert nur noch als verlustleistungserzeugendes Element zwischen Versorgungsspannungsquelle Q und Verbraucher V. Durch die Überbrückung des Stellgliedes F1 durch den Schalter F2 wird diese Verlustleistung jedoch reduziert. Wird für den Halbleiterschalter F2 der gleiche MOSFET-Typ verwendet wie für das Stellglied F1, wirkt als verlustleistungserzeugender Gesamtwiderstand nur noch der Widerstand der Parallelschaltung der Bahnwiderstände der beiden MOSFETs. Eine größere Reduzierung der Verlustleistung kann dadurch erreicht werden, daß entweder für den MOSFET F2 ein Typ mit geringerem Bahnwiderstand ausgewählt wird oder, wie das Ausführungsbeispiel nach Figur 2 zeigt, mehrere gleichartige als Schalter arbeitende MOSFETs F2 bis F4 zum Stellglied F1 parallel geschaltet werden. Alle diese MOSFETs F2 bis F4 können durch den Schwellwertkomparator K1 gesteuert werden.

Wie Figur 2 zeigt kann als Meßverstärker MV ein über die Widerstände R2 und R3 gegengekoppelter Operationsverstärker Op1 verwendet werden. Die in Figur 1 schematisch gezeigte Subtrahierstufe SUB1 kann zusammen mit dem Regelverstärker RV durch einen entsprechend beschalteten weiteren Operationsverstärker Op2 realisiert werden. Die Referenzspannung Uref1 wird dem Operationsverstärker Op2 am nichtinvertierenden Eingang zugeführt. Der invertierende Eingang steht in Wirkverbindung mit dem Ausgang des Operationsverstärkers Op1. Über die RC-Glieder im Gegenkopplungszweig erhält der Operationsverstärker Op2 PID-Verhalten und kann so auf die Lastkennlinie des Verbrauchers dynamisch optimal abgestimmt werden. Der Schwellwertkomparator K1 ist am invertierenden Eingang mit der Schwellenspannung Uthr beaufschlagt. Der nichtinvertierende Eingang steht in Wirkverbindung mit dem Ausgang des Operationsverstärkers Op2. Im Unterschied zu Figur 1 ist der Ausgang des Schwellwertkomparators K1 über eine Transistorstufe T1 mit den Gateanschlüssen der MOSFETs F2, F3, F4 verbunden. Diese Transistorstufe T1 dient dazu die hohe Gesamtgatekapazität der parallel geschalteten MOSFETS F2 bis F4 schnell zu entladen, um im Fehlerfall die als Schalter verwendeten MOSFETS F2 bis F4 schnell zu öffnen.

In einer Schutzschaltung SR wird das Ausgangspotential des Komparators K1 über ein Zeitglied bestehend aus Widerstand R4 und Kondensator C1 und einem Komparator K2 ausgewertet. Würde der Längsregler LR über längere Zeit im Strombegrenzungsbetrieb arbeiten, so würde seine maximal zulässige Verlustleistung überschritten werden. Die Zeit für die der Längsregler LR maximal im Strombegrenzungsbetrieb arbeiten darf, ist durch das Zeitglied R4, C1 vorgegeben. Erreicht die Ladespannung am Kondensator C1 den Spannungswert der Hilfsspannungsquelle QH2, wird der Transistor T2 über das Ausgangssignal des Komparators K2 leitend gesteuert. Über den leitenden Transistor T2 wird das Potential am Punkt P1 auf 0 gezwungen. Da dieser Punkt P1 mit dem Gate des MOSFET F1 verbunden ist, wird die Gatespannung 0 und der MOSFET F1 abgeschaltet. Über die Mitkopplung durch den Komparator K1 wird dieser Zustand der Schutzschaltung SR gespeichert. Erst über die Rücksetzeinrichtung RS wird bei Schließen des Tasters S1 mit den zwei Kontakten S1a und S1b der gespeicherte Zustand wieder zurückgesetzt. Gleichzeitig wird bei Betätigen des Tasters S1 (Schaltkontakt S1a) die Diode D3 leitend und bringt die MOSFETs F1 bis F4 in den Sperrzustand. Damit ist auch während des Rücksetzvorgangs ein Überlastungsschutz gewährleistet. Erst nach Beendigung des Rücksetzens ist der Ausgangszustand wieder hergestellt. Im Normalzustand ist der Widerstand R4 mit dem Ausgang des Komparators K1 verbunden. Im Rücksetzzustand ist der Widerstand R4 auf das Potential der Hilfsspannungsquelle QH3 mit z.B. 15 V gelegt. Damit führt der Eingang des Komparators K2 das Potential der Hilfsspannungsquelle QH3.

Anstelle der Abschaltung des Stellgliedes F1 bei Erreichen der zulässigen Verlustleitung kann der Längsregler LR so gesteuert werden, daß nur noch ein Minimalstrom, z.B. 10 % des Nennstroms, fließen kann. Für diese Alternative ist es zweckmäßig den Transistor T2 dazu zu verwenden, die Referenzspannung Uref1 auf einen anderen Wert umzuschalten.

Zur Stromerfassung kann vorteilhafterweise die Anordnung gemäß EP 184 609 B1 verwendet werden, die den Widerstand R1 und den Meßverstärker MV ersetzt. Durch Verwendung dieser Anordnung können Temperaturdriften die Stromauswertung nicht verfälschen.

Die Einrichtung nach der Erfindung eignet sich insbesondere zum Einsatz in der Stromversorgung eines solarzellengespeisten Wanderfeldröhrenverstärkers mit Ausgangsleistungen zwischen 30 und 270 W.

## Patentansprüche

1. Verfahren zur Strombegrenzung eines Längsreglers (LR), dadurch gekennzeichnet, daß das Stellglied (F1) des Längsreglers (LR) im nicht begrenzenden Betrieb niederohmig überbrückt wird.

2. Verfahren nach Anspruch 1, dadurch gekennzeichnet, daß der Längsregler (LR) bei Erreichen einer vorgegebenen zulässigen Verlustleistung abgeschaltet wird.

3. Verfahren nach Anspruch 1, dadurch gekennzeichnt, daß der Längsregler (LR) bei Erreichen einer vorgegebenen zulässigen Verlustleistung so gesteuert wird, daß nur noch ein Minimalstrom fließen kann.

4. Verfahren nach einem der Ansprüche 1 bis 3, dadurch gekennzeichnet, daß ausgewertet wird, ob der Längsregler (LR) im begrenzenden Betrieb arbeitet und daß für diesen Betriebsfall ein Sperrsignal für Halbleiterschlalter (F2, F3 und F4) generiert wird, die das Stellglied (F1) niederohmig überbrücken.

5. Verfahren nach Anspruch 2, dadurch gekennzeichnet, daß der Zustand des Erreichens der vorgegebenen Verlustleistung gespeichert wird und dieser Speicherzustand erst durch einen Rücksetzvorgang beendet wird.

6. Verfahren nach einem der Ansprüche 1 bis 5, dadurch gekennzeichnet, daß zur niederohmigen Überbrückung des Stellgliedes (F1) mehrere Überbrückungsmittel/Halbleiterschalter (F2, F3, F4) parallel betrieben werden.

7. Verwendung des Verfahrens nach einem der Ansprüche 1 bis 6, bei einer solarzellengespeisten Stromversorgung eines Wandfeldröhrenverstärkers.

## Claims

1. Method for limiting the current in a series regulator (LR), characterized in that the control element (F1) of the series regulator (LR) is bridged in a low-impedance manner in non-limiting operation.

2. Method according to Claim 1, characterized in that the series regulator (LR) is switched off on reaching a predetermined permissible power loss.

3. Method according to Claim 1, characterized in that the series regulator (LR) is controlled on reaching a predetermined permissible power loss, such that only a minimal current can still flow.

4. Method according to one of Claims 1 to 3, characterized in that an evaluation is carried out to determine whether the series regulator (LR) is working in limited operation, and in that a turn-off signal for semiconductor switches (F2, F3 and F4) is generated for this operating situation, which semiconductor switches (F2, F3 and F4) bridge the control element (F1) in a low-impedance manner.

5. Method according to Claim 2, characterized in that the state on reaching the predetermined power loss is stored, and this memory state is not ended until a reset process is carried out.

6. Method according to one of Claims 1 to 5, characterized in that a plurality of bridging means / semi-conductor switches (F2, F3, F4) are operated in parallel in order to bridge the control element (F1) in a low-impedance manner.

7. Use of the method according to one of Claims 1 to 6 in a power supply, which is fed from solar cells, of a travelling wave tube amplifier.

## Revendications

1. Procédé pour limiter le courant d'un régulateur série (LR),
caractérisé en ce que
l'organe de réglage (F1) du régulateur série (LR) est shunté de manière faiblement ohmique en mode non limitatif.

2. Procédé selon la revendication 1,
caractérisé en ce que
le régulateur série (LR) est coupé lorsqu'on atteint une puissance perdue autorisée, prédéterminée.

3. Procédé selon la revendication 1,
caractérisé en ce que
le régulateur série (LR) est commandé lorsqu'on atteint une perte de puissance autorisée, prédéterminée, pour ne plus laisser passer qu'un courant minimum.

4. Procédé selon l'une des revendications 1 à 3,
caractérisé en ce qu'
on exploite le fait que le régulateur série (LR) travaille en mode limitatif et, pour ce mode de fonctionnement, on génère un signal de blocage des commutateurs semiconducteurs (F2, F3, F4) qui shunte l'organe de réglage (F1) par un chemin faiblement ohmique.

5. Procédé selon la revendication 2,
caractérisé en ce qu'
on met en mémoire le fait d'atteindre la perte de puissance prédéterminée, et cet état mémorisé n'est terminé que par une opération de remise à l'état initial.

6. Procédé selon l'une des revendications 1 à 5,
caractérisé en ce que
pour shunter de manière faiblement ohmique l'organe de réglage (F1), on fait travailler en parallèle plusieurs commutateurs semi-conducteurs/moyens formant des shunts (F2, F3, F4).

7. Application du procédé selon l'une des revendications 1 à 6 à l'alimentation électrique par pile solaire d'un amplificateur à tube à ondes progressives.
